(19) **Europäisches Patentamt**

**European Patent Office**

**Office européen des brevets**

(11) Veröffentlichungsnummer: **0 139 131**
**B1**

(12) **EUROPÄISCHE PATENTSCHRIFT**

(45) Veröffentlichungstag der Patentschrift:
**17.02.88**

(21) Anmeldenummer: **84109437.8**

(22) Anmeldetag: **08.08.84**

(51) Int. Cl.⁴: **A 62 C 3/14,** A 62 C 37/14,
F 16 K 31/64, F 16 K 31/72

(54) **Sicherheitsventil.**

(30) Priorität: **17.08.83 DE 8323645 U**

(43) Veröffentlichungstag der Anmeldung:
**02.05.85 Patentblatt 85/18**

(45) Bekanntmachung des Hinweises auf die Patenterteilung:
**17.02.88 Patentblatt 88/7**

(84) Benannte Vertragsstaaten:
**DE FR GB IT NL SE**

(56) Entgegenhaltungen:
**AT - B - 23 267**
**DE - C - 503 463**

(73) Patentinhaber: **Schmidt, Dieter, Mozartstrasse 4,
D-2875 Ganderkesee 1 (DE)**

(72) Erfinder: **Schmidt, Dieter, Mozartstrasse 4,
D-2875 Ganderkesee 1 (DE)**

(74) Vertreter: **UEXKÜLL & STOLBERG Patentanwälte,
Beselerstrasse 4, D-2000 Hamburg 52 (DE)**

## Beschreibung

Die Erfindung bezieht sich auf ein Sicherheitsventil für pneumatisch oder hydraulisch zu betätigende Einrichtungen, die im Falle eines Brandes in einen vorbestimmten Zustand gebracht bzw. in einem vorbestimmten Zustand gehalten werden müssen, insbesondere für Feuerschutztüren, mit einem Einlass und einem Auslass für das Arbeitsfluid, einem zwischen diesen angeordneten Ventilsitz, auf dem ein zwischen einer Dichtstellung und einer Öffnungsstellung bewegbares Ventilelement zur dichtenden Anlage bringbar ist, sowie mit einer Entlüftungsöffnung, die bei in der Dichtstellung befindlichem Ventilelement mit dem Auslass verbunden und bei in der Öffnungsstellung befindlichem Ventilelement gegenüber dem Einlass und dem Auslass abgedichtet ist.

Derartige Ventile (Prospekt Nr. DSt 4 305 der Knorr-Bremse GmbH, München, 1980), werden beispielsweise in Anlagen für den Betrieb von Feuerschutztüren auf Schiffen eingesetzt, um die Steuereinrichtungen für die einzelnen Feuerschutztüren mit Druckluft zu beaufschlagen. Befindet sich das Ventilelement in der Dichtstellung, so ist die Druckluftverbindung zwischen Einlass und Auslass unterbrochen, und der Auslass ist mit der Entlüftungsöffnung verbunden, so dass die im Verbindungsbereich zwischen Auslass und Steuereinrichtung befindliche Druckluft über die Entlüftungsöffnung entweichen kann.

Ein wesentliches Problem bei den Betätigungseinrichtungen für derartige Feuerschutztüren, etwa auf Schiffen, aber auch bei anderen pneumatisch oder hydraulisch zu betätigenden Einrichtungen besteht darin, sicherzustellen, dass sich im Falle eines Brandes ein vorbestimmter Zustand ergibt bzw. eine Bewegung in einen vorbestimmten Zustand erfolgt, also beispielsweise die Feuerschutztüren geschlossen bleiben und sich nicht infolge Brandschäden an den zugehörigen Bauelementen selbsttätig öffnen. Dies könnte beispielsweise geschehen, wenn ein die Druckluftzufuhr zur Steuereinrichtung für die Feuerschutztür unterbrechendes Ventil infolge starker Erhitzung, beispielsweise durch Beschädigung seiner Gummidichtungen undicht wird und dann Druckluft durchlässt. Diese durchtretende Druckluft könnte ein Öffnen einer Feuerschutztür hervorrufen und damit die an sich beabsichtige Wirkung der Feuerschutztür vollständig beseitigen.

Es ist Aufgabe der Erfindung, ein Sicherheitsventil zu schaffen, das im Brandfall zuverlässig und dauerhaft in eine solche Betriebsstellung gebracht wird, dass die pneumatisch oder hydraulisch zu betätigende Einrichtung in einen vorbestimmten Zustand kommt bzw. in diesem vorbestimmten Zustand gehalten wird.

Zur Lösung dieser Aufgabe wird ein Sicherheitsventil der eingangs erwähnten Art erfindungsgemäss derart ausgestaltet, dass die dem Ventilsitz benachbarte, vom Einlass mit Arbeitsfluid zu beaufschlagende Fläche, die einen Arbeitsfluid aufnehmenden Steuerhohlraum teilweise begrenzt, dass der Steuerhohlraum ferner von einem Einsatz begrenzt ist, der eine an seinem inneren Ende in den Steuerhohlraum mündende Durchgangsbohrung aufweist, deren Querschnitt wesentlich grösser ist als der minimale Querschnitt der Verbindung zwischen Einlass und der dem Ventilsitz entfernteren Fläche des Ventilelementes, und dass die Durchgangsbohrung an ihrem äusseren Ende mit Hilfe eines durch Hitze zerstörbaren Auslöseelementes abgedichtet ist.

Bei dem erfindungsgemässen Ventil übt die am Einlass des Ventils auftretende Druckluft infolge der Flächenbemessung des Ventilelementes auf die dem Steuerhohlraum zugewandte Fläche eine grössere Kraft aus, als auf die dem Ventilsitz benachbarte Fläche, so dass sich das Ventilelement normalerweise im geöffneten Zustand befindet und Druckluft vom Einlass zum Auslass und dadurch zur Steuereinrichtung gelangen kann.

Das erfindungsgemässe Sicherheitsventil weist ein durch Hitze zerstörbares Auslöseelement auf, das bei den bei Bränden auftretenden Temperaturen, die bis zu 1 100 °C betragen können, zuverlässig zerstört wird, wobei die Zerstörung vorzugsweise bei Temperaturen zwischen 100 °C und 120 °C eintreten soll. Infolge der Zerstörung des Auslöseelementes wird der Steuerhohlraum über die Durchgangsbohrung entlüftet und dadurch das Ventilelement in seine Dichtstellung gebracht. In dieser Dichtstellung wird das Ventilelement durch die am Einlass anstehende Druckluft gehalten, und in dieser Lage des Ventilelementes erfolgt eine Entlüftung des Auslasses des Ventils über die Entlüftungsöffnung, d.h. es ist sichergestellt, dass der nachgeschalteten Einrichtung selbst bei weiterer Erhöhung der Temperatur infolge des Brandes keine Druckluft mehr zugeführt wird, was dadurch noch weiter sichergestellt werden kann, dass sowohl der Ventilsitz als auch zumindest der an diesem zur Anlage gebrachte Teil des Ventilelementes aus Edelstahl bestehen, also durch die hohen Temperaturen infolge des Brandes nicht beschädigt oder undicht werden kann.

Um das erfindungsgemässe Sicherheitsventil funktionsfähig zu machen, ist es jedoch überraschenderweise erforderlich, dass die einen geringen Querschnitt aufweisende Verbindung durch das Ventilelement einen kleineren Querschnitt hat, als die Durchgangsbohrung des Verschlusselementes, denn nur dann, wenn der Querschnitt der Durchgangsbohrung grösser ist als der minimale Querschnitt der Verbindung ergibt sich eine sichere und zuverlässige Funktion im Falle der Zerstörung des Auslöseelementes.

Um die Durchgangsbohrung im Normalzustand durch das Auslöseelement zuverlässig und unabhängig von Materialalterungen o.ä. abgedichtet zu halten, kann das Auslöseelement von einer Feder gegen einen Verschlussstopfen gedrückt sein, der in dieser Lage eine Abdichtung der Durchgangsbohrung bewirkt.

Besonders geeignet ist als Auslöseelement eine eine Flüssigkeit mit niedrigem Siedepunkt enthaltende, geschlossene Glasampulle, die bei ausreichender Erwärmung platzt und so die Verlagerung des Verschlussstopfens und damit die Schliessbewegung des Ventilelementes ermöglicht. Derartige Glasampullen wurden beispielsweise in Sprinkler-Anlagen eingesetzt.

Wie vorstehend bereits erwähnt, muss der minimale Querschnitt der Verbindung kleiner sein als der Querschnitt der Durchgangsbohrung. Vorzugsweise ist die minimale Querschnittsfläche der Verbindung nicht grösser als die Hälfte der Querschnittsfläche der Durchgangsbohrung.

Dient das erfindungsgemässe Sicherheitsventil für pneumatisch zu betätigende Einrichtungen, so kann das Auslöseelement die Durchgangsbohrung gegen die Umgebungsluft abdichten, d.h. bei Zerstörung des Auslöseelementes tritt Druckluft in die Umgebungsluft aus.

Wird das erfindungsgemässe Sicherheitsventil in hydraulisch zu betätigenden Einrichtungen eingesetzt, so soll die Hydraulikflüssigkeit selbstverständlich bei Zerstörung des Auslöseelementes möglichst nicht in die Umgebung ausfliessen. Das Auslöseelement kann daher die Durchgangsbohrung gegen einen Auffangbehälter für Hydraulikflüssigkeit abdichten, d.h. die Hydraulikflüssigkeit strömt bei Zerstörung des Auslöseelementes in den Auffangbehälter.

Da das erfindungsgemässe Sicherheitsventil im Normalbetrieb immer geöffnet ist, d.h. das Ventilelement infolge des Drucks im Steuerhohlraum in seiner Öffnungsstellung gehalten wird und nur dann in seine Dichtstellung kommt, wenn das Auslöseelement zerstört wird, ist es besonders zweckmässig, eine Möglichkeit vorzusehen, die Funktionsfähigkeit des Sicherheitsventils überprüfen zu können, ohne dass hierzu eine Zerstörung des Auslöseelementes notwendig wäre. Zu diesem Zweck kann der Steuerhohlraum oder die Durchgangsbohrung des Sicherheitsventils mit einer Öffnung zum Anschluss eines Prüfhahns verbunden sein. Der Prüfhahn ist normalerweise geschlossen, wird jedoch zur Funktionsprüfung des Ventils geöffnet, so dass sich ein Zustand ergibt, der demjenigen entspricht, der bei Zerstörung des Auslöseelementes eintritt. Wenn dann das Ventilelement in die Schliessstellung bewegt wird, ist nachgewiesen, dass das Sicherheitsventil funktionsfähig ist. Wird danach der Prüfhahn wieder geschlossen, so baut sich im Steuerhohlraum erneut der das Ventilelement in die Öffnungsstellung bewegende Druck auf.

Die Erfindung wird im folgenden anhand der schematisch Ausführungsbeispiele zeigenden Figuren näher erläutert.

Figur 1 zeigt einen Schnitt durch ein Sicherheitsventil für eine pneumatisch gesteuerte Einrichtung.

Figur 2 zeigt einen Schnitt durch ein Sicherheitsventil für eine hydraulisch gesteuerte Einrichtung.

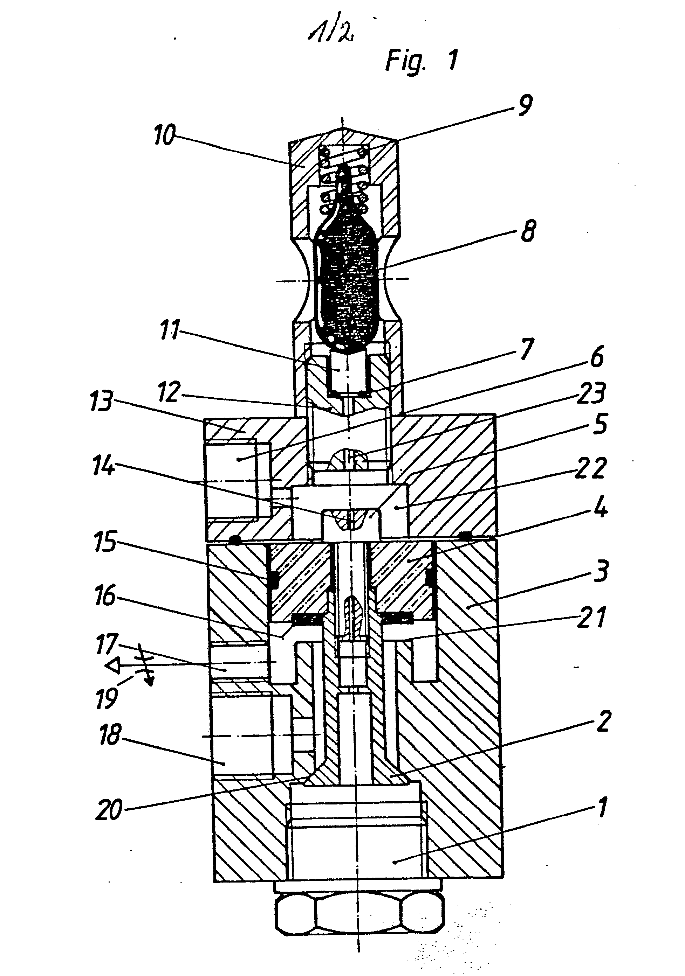

Das Sicherheitsventil gemäss Figur 1 hat einen aus einem Teil 3 und einem Teil 13 bestehenden Ventilkörper. Die vorzugsweise aus Edelstahl bestehenden Teile 3 und 13 sind in nicht dargestellter Weise unter Zwischenschaltung eines O-Ringes dichtend miteinander verbunden. Im Teil 3 ist ein Einlass 1 vorgesehen, an den eine Druckluftleitung angeschlossen werden kann. Vom Einlass 1 erstreckt sich koaxial eine zylindrische Öffnung, die über eine Öffnung in ihrer Seitenwand mit einem Auslass 18 verbunden ist. In der zylindrischen Öffnung ist koaxial ein Ventilelement 2 angeordnet, das aus Edelstahl besteht und an seinem unteren Ende eine kegelstumpfförmige Dichtfläche aufweist, die in der dargestellten Dichtstellung des Ventilelementes dichtend an einem im Übergang vom Einlass 1 zur zylindrischen Öffnung gebildeten Ventilsitz 20 flächig und dichtend anliegt. Zwischen dem Ventilelement 2 und der Wand der zylindrischen Öffnung ist ein Ringraum gebildet, der mit einer seitlichen Entlüftungsöffnung 17 verbunden ist, an die eine Drossel 19 angeschlossen werden kann. Infolge dieser Verbindung steht im dargestellten Zustand auch der Auslass 18 in Verbindung mit der Entlüftungsöffnung 17.

Am in der Figur oberen Ende ist am Ventilelement 2 ein Dichtkörper 4 befestigt, der an seiner unteren Fläche eine Ringdichtung 16 und an seiner Aussenfläche eine Ringdichtung 15 aufweist. Die Verbindung zwischen Dichtkörper 4 und Ventilelement 2 erfolgt durch eine Schraube 5, deren Kopf an der oberen Fläche des Dichtkörpers 4 anliegt und die eine den Einlass 1 mit dem Raum oberhalb des Schraubenkopfes verbindende Bohrung 14 aufweist. Das untere Ende der Bohrung 14 endet an einer durchgehenden Innenbohrung des Ventilelementes 2.

Das Teil 13 hat eine Aussparung, die zusammen mit der oberen Fläche des Dichtkörpers 34 einen Steuerhohlraum 22 bildet, von dem aus eine Gewindebohrung nach oben verläuft, in die ein Einsatz 12 eingeschraubt ist. Der Einsatz 12 hat an seinem oberen Ende ein Sackloch und nimmt in diesem einen Verschlussstopfen 11 auf. Ferner ist auf das freie Ende des Einsatzes 12 ein Kappenelement 10 aufgeschraubt, das seitliche Öffnungen aufweist. Im oberen Ende dieses Kappenelementes stützt sich eine Feder 9 ab, deren unteres Ende auf dem Halsbereich einer geschlossenen, eine Flüssigkeit mit niedrigem Siedepunkt enthaltenden Glasampulle 8 aufliegt und diese gegen den Verschlussstopfen 11 drückt, so dass die sich durch den Einsatz 12 erstreckende Durchgangsbohrung 23 mit Hilfe des in der Bodenfläche des den Verschlussstopfen 11 aufnehmenden Sackloches angeordneten O-Rings 7 abgedichtet wird.

Seitlich im Teil 13 ist eine Gewindeöffnung 6 vorhanden, die mit dem Steuerhohlraum 22 verbunden ist und in die im Betrieb ein nicht dargestellter Prüfhahn eingeschraubt wird, so dass die Öffnung 6 normalerweise dichtend verschlossen ist.

Das in Figur 1 dargestellte Sicherheitsventil kann beispielsweise in die Druckluftzuleitung für die Steuereinrichtung einer pneumatisch zu betätigenden Feuertür eingebaut werden, wobei eine solche Druckluftzuleitung üblicherweise an eine Haupt-Ringleitung angeschlossen ist, die die Steuereinrichtungen verschiedener Feuertüren mit Druckluft versorgt.

Wird dem Einlass 1 des Sicherheitsventils Druckluft zugeführt, so drückt diese zunächst auf die in Figur 1 untere Fläche des Ventilelementes 2 und hält das Ventilelement in der dargestellten Lage bzw. bringt es in diese Lage. Durch die Mittelöffnung des Ventilelementes 2 und die einen sehr kleinen Querschnitt aufweisende Bohrung 14 der Schraube 5 tritt allmählich Druckluft in den Steuerhohlraum 22 ein, wodurch im Steuerhohlraum der gleiche Druck aufgebaut wird wie am Einlass 1. Da jedoch die vom Druck beaufschlagte Fläche aus Oberfläche des Kopfes der Schraube 5 und Oberfläche des den Steuerhohlraum 22 begrenzenden Flächenbereichs des Dichtkörpers 4 grösser ist als die untere Ringfläche des Ventilelementes 2 wird das Ventilelement aus der dargestellten Lage nach unten in seine Öffnungsstellung bewegt, in der die kegelstumpfförmige Dichtfläche sich im Abstand vom Ventilsitz 20 befindet und in der die Ringdichtung 16 dichtend auf der Fläche 21 aufliegt und so die die Fortsetzung des Einlasses 1 bildende Mittelöffnung verschliesst. In dieser Lage ist der Einlass 1 mit dem Auslass 18 verbunden, jedoch die Verbindung zwischen Auslass 18 und Entlüftungsöffnung 17 unterbrochen. Der Steuereinrichtung wird daher vom Auslass 18 Druckluft zugeführt.

Steigt die Temperatur in der Umgebung des Sicherheitsventils infolge eines Brandes stark an, so verdampft die Flüssigkeit in der Glasampulle 8, wodurch die Glasampulle zerstört wird. Infolge dieser Zerstörung bewirkt die Druckluft in der Durchgangsbohrung 23, deren Querschnittsfläche mindestens doppelt so gross ist, wie die Querschnittsfläche der Bohrung 14 in der Schraube 5, eine Verlagerung des Verschlussstopfens 11 in Figur 1 nach oben, wodurch die Dichtwirkung des O-Ringes 7 aufgehoben wird. Somit ergibt sich im Steuerhohlraum 22 eine Druckabsenkung, die infolge der unterschiedlichen Bemessungen von Durchgangsbohrung 23 und Bohrung 14 nicht von der vom Einlass 1 zugeführten Druckluft ausgeglichen werden kann. Die auf die untere Fläche des Ventilelementes 2 wirkende Druckluft bewegt daher das Ventilelement in die in Figur 1 gezeigte Lage, wodurch mittels der kegelstumpfförmigen Dichtfläche des Ventilelementes 2 und des Ventilsitzes 20 die Verbindung zwischen Einlass 1 und Auslass 18 unterbrochen wird. Der Einlass 18 wird nunmehr über die Entlüftungsöffnung 17 entlüftet und so noch vorhandene Druckluft aus der Steuereinrichtung für die Feuertür entfernt. Die Steuereinrichtung kann daher die Feuertür auf keinen Fall mehr öffnen, selbst wenn innerhalb der Steuereinrichtung durch Erhitzung Undichtigkeiten in Ventilen u.ä. auftreten.

Da sowohl das Ventilelement 2 als auch der Ventilsitz 20 insbesondere das ganze Teil 3 sowie auch die meisten anderen Teile des Sicherheitsventils aus Edelstahl bestehen, kann selbst bei Erhitzung des Ventils infolge des Brandes keine Undichtigkeit auftreten, sondern die Dichtwirkung wird auch bei Temperaturen von 1 100 °C noch aufrechterhalten. Tritt trotzdem eine Undichtigkeit auf, führt dies nicht zu einer für das Öffnen einer Tür ausreichenden Druckluftzufuhr zur Steuereinrichtunq, weil der Auslass 18 mit der Entlüftungsöffnung 17 verbunden ist.

Da durch die Bohrung 14 der Schraube 5 nur verhältnismässig wenig Druckluft pro Zeiteinheit hindurch und dann durch die Durchgangsbohrung 23 in die Umgebungsluft austritt, ergeben sich bei geschlossenem Sicherheitsventil zwar Druckluftverluste, doch sind diese so gering, dass ein ausreichender Betriebsdruck in der Haupt-Ringleitung aufrechterhalten bleibt, also andere Feuertüren, die sich nicht im Bereich des Brandes befinden, weiterhin pneumatisch geöffnet und geschlossen werden können.

Um das dargestellte Sicherheitsventil im geöffneten Zustand auf seine Funktionsfähigkeit zu überprüfen, kann der an die Öffnung 6 angeschlossene, nicht dargestellte Prüfhahn kurzzeitig geöffnet werden. Dieses Öffnen des Prüfhahns führt zu einer Druckabsenkung im Steuerhohlraum 22, also zu einem Zustand, wie er auch bei Zerstörung der Glasampulle 8 eintritt. Ist das Ventil im funktionsfähigen Zustand, so wird infolge dieser Druckabsenkung das Ventilelement 2 in der vorstehend im Zusammenhang mit der Zerstörung der Glasampulle 8 beschriebenen Weise in die dargestellte Schliessstellung bewegt, wodurch die Funktionsfähigkeit des Sicherheitsventils nachgewiesen ist.

Nach dem Schliessen des Prüfhahns baut sich im Steuerhohlraum 22 über die Bohrung 14 wieder der gleiche Druck auf, wie am Einlass 1 zugeführt, und der Ventilkörper 2 wird wieder in die Öffnungsstellung bewegt, also der Einlass 1 mit dem Auslass 18 verbunden und der Auslass 18 mittels der Ringdichtung 16 gegenüber der Entlüftungsöffnung 17 abgedichtet.

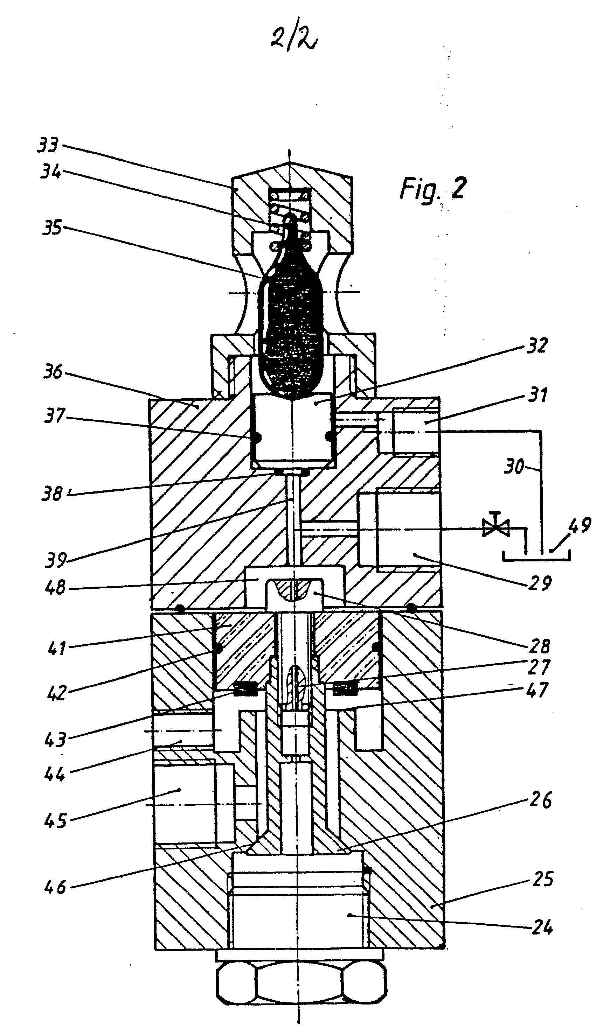

Das in Figur 2 dargestellte Sicherheitsventil entspricht in seinem Aufbau und seiner Funktion im wesentlichen dem Sicherheitsventil aus Figur 1, dient jedoch für den Einsatz in hydraulisch gesteuerten Einrichtungen.

Wie dargestellt, hat das Sicherheitsventil gemäss Figur 2 einen Ventilkörper aus einem Teil 25 und einem als Einsatz dienenden Teil 36. Die beiden Teile sind in nicht dargestellter Weise unter Zwischenschaltung eines O-Ringes dichtend miteinander verbunden. Im Teil 25 befindet sich ein Einlass 24 für die Zufuhr von Hydraulikflüssigkeit, der sich in gleicher Weise wie bei dem Sicherheitsventil gemäss Figur 1 in einer konzentrischen Mittelbohrung fortsetzt, wobei in der Wand eine Öffnung zur Verbindung mit dem Auslass 45 vorgesehen ist. In der Mittelbohrung ist ein entsprechend dem Ventilelement 2 aus Figur 1 aufgebautes Ventilelement 26 mit kegelstumpfförmiger Dichtfläche angeordnet, die an einem Ventilsitz 46 anliegt. Auch hier bestehen Ventilelement 26 und Ventilsitz 46, also das Teil 25 aus Edelstahl. Am oberen Ende des Ventilelementes 26 ist ein dem Dichtkörper 4 aus Figur 1 entsprechender Dichtkörper 41 mit unterer Ringdichtung 43 und äusserer Ringdichtung 42 mittels einer der Schraube 5 aus Figur 1 entsprechenden Schraube 28 mit Mittelbohrung 27 befestigt. Seitlich im Teil 25 ist eine Entlüftungsöffnung 44 vorhanden, an die eine nicht dargestellte Leitung angeschlossen wird, über die Hydraulikflüssigkeit in den Auffangbehälter 49 geleitet werden kann.

Im Teil 36 ist eine Aussparung vorhanden, die zusammen mit der oberen Fläche des Dichtkörpers 41 und dem Schraubenkopf 28 einen Steuerhohlraum 48 begrenzt, von dem aus sich eine Durchgangsbohrung 39, entsprechend der Durchgangsbohrung 23 aus Figur 1 nach oben in ein Sackloch erstreckt. In diesem Sackloch befindet sich ein Verschlussstopfen 32, der von einer Glasampulle 35, entsprechend der Glasampulle 8 aus Figur 1, infolge Wirkung der in dem Öffnungen aufweisenden Kappenelement 33 angeordneten Feder 34 gegen den Verschlussstopfen 32 gepresst wird, so dass dieser mit seiner unteren Fläche fest auf dem O-Ring 38 aufliegt. In der Umfangswand des Verschlussstopfens befindet sich ein an der Wand des Sackloches dichtend anliegender O-Ring 37.

Eine Auslauföffnung 31 im Teil 36 ist über eine Leitung 30 mit dem Auffangbehälter 49 verbunden, und die Auslauföffnung 31 steht über eine Querbohrung mit dem Innenraum des Sackloches in Verbindung, wobei diese Querbohrung bei sich in dichtender Auflage auf dem O-Ring 38 befindenden Verschlussstopfen 32 oberhalb des O-Ringes 37 in das Sackloch mündet.

Wie bereits erwähnt, entspricht die Funktionsweise des Sicherheitsventils gemäss Figur 2 derjenigen des Sicherheitsventils aus Figur 1. Wird daher dem Sicherheitsventil gemäss Figur 2 über den Einlass 24 Hydraulikflüssigkeit zugeführt, so bringt bzw. hält diese infolge des Druckes an der unteren Fläche des Ventilelementes 26 dieses zunächst in seiner Dichtstellung. Die Hydraulikflüssigkeit tritt jedoch infolge des Überdrucks durch die Mittelbohrung 27 hindurch in den Steuerhohlraum 48 ein und baut dort allmählich einen dem Druck am Einlass 24 entsprechenden Druck auf. Da die mit Druck beaufschlagte Fläche von Schraubenkopf 28 und Dichtkörper 41 jedoch grösser ist, als die untere Fläche des Ventilelementes 26, bewegt sich das Ventilelement 26 in seine Öffnungsstellung, in der der Einlass 24 mit dem Auslass 24 verbunden und die Entlüftungsöffnung 44 infolge Auflage der Ringdichtung 43 auf der Fläche 47 gegenüber dem Auslass 45 abgedichtet ist.

Wird die Glasampulle 35 zerstört, so bewirkt die unter Druck stehende Hydraulikflüssigkeit im Steuerhohlraum 48 und der Durchgangsbohrung 39 eine Verlagerung des Verschlussstopfens 32 in Figur 2 nach oben, bis dieser zur Anlage an der in das Sackloch vorspringenden Ringfläche des Kappenelementes 33 kommt. In dieser Lage befindet sich der O-Ring oberhalb der Querbohrung, so dass Hydraulikflüssigkeit aus dem Steuerhohlraum 48 über die Durchgangsbohrung 39, die Querbohrung, die Auslauföffnung 31 und die Leitung 30 in den Auffangbehälter 49 abfliessen kann. Dadurch sinkt der Druck im Steuerhohlraum 48, und der Druck an der unteren Fläche des Ventilelementes 26 bewegt dieses in die in Figur 2 gezeigte Dichtstellung, in der über die Entlüftungseinrichtung 44 Hydraulikflüssigkeit aus der mit dem Auslass 45 verbundenen Steuereinrichtung abfliessen kann.

Selbstverständlich muss auch in diesem Fall der Querschnitt bzw. die Querschnittsfläche der Durchgangsbohrung 39 deutlich grösser als der Querschnitt bzw. Querschnittsfläche der Bohrung 27 sein damit es zu einem wirksamen Druckabfall im Steuerhohlraum 48 kommt.

Um die Funktionsfähigkeit des Sicherheitsventils gemäss Figur 2 ohne Zerstörung der Glasampulle 35 überprüfen zu können, ist eine Gewindebohrung 29 vorhanden, die über eine Bohrung mit der Durchgangsbohrung 39 verbunden ist und an die ein Prüfhahn angeschlossen wird. Durch Öffnen dieses Prüfhahns kann, wie in Zusammenhang mit dem Sicherheitsventil aus Figur 1 beschrieben, der Druck im Steuerhohlraum 48 abgesenkt werden, um festzustellen, ob das Ventilelement 26 sich dann in die Schliessstellung bewegt, das Sicherheitsventil also funktionsfähig ist.

Es sei erwähnt, dass die Verbindung zwischen Einlass 1, 24 und Steuerhohlraum 22, 48, also insbesondere die Bohrung 14 aus Figur 1 und die Bohrung 27 aus Figur 2 einen möglichst kleinen Querschnitt haben sollten, damit beim Ansprechen des Sicherheitsventils, also bei Zerstörung der Glasampulle 8, 35 möglichst wenig Arbeitsfluid vom Einlass 1 bzw. 24 durch diese Bohrung hindurch austritt. Bei Austritt einer zu grossen Menge Arbeitsfluid würde es zu einem erheblichen Druckabfall in der Haupt-Fluidleitung kommen, was unerwünscht ist. Andererseits muss der Querschnitt dieser Bohrungen selbstverständlich ausreichen, um innerhalb einer sinnvollen Zeitspanne den erforderlichen Betriebsdruck im Steuerhohlraum aufzubauen. Es hat sich gezeigt, dass beispielsweise bei Einsatz von Sicherheitsventilen gemäss Figur 1 in pneumatischen Betätigungseinrichtungen für Feuertüren auf Schiffen ein minimaler Durchmesser der kreisförmigen Verbindungsbohrung zwischen Einlass 1 und Steuerhohlraum 22 von 0,22 mm bis 0,5 mm zweckmässig ist.

**Patentansprüche**

1. Sicherheitsventil für pneumatisch oder hydraulisch zu betätigende Einrichtungen, die im Falle eines Brandes in einen vorbestimmten Zustand gebracht bzw. in einem vorbestimmten Zustand gehalten werden müssen, insbesondere für Feuerschutztüren, mit einem Einlass (1; 24) und einem Auslass (18; 45) für das Arbeitsfluid, einem zwischen diesen angeordneten Ventilsitz (20; 46), auf dem ein zwischen einer Dichtstellung und einer Öffnungsstellung bewegbares Ventilelement (2, 4; 26, 41) zur dichtenden Anlage bringbar ist, sowie mit einer Entlüftungsöffnung (17; 44), die bei in der Dichtstellung befindlichem Ventilelement (2, 4; 26, 41) mit dem Auslass (18; 45) verbunden und bei in der Öffnungsstellung befindlichem Ventilelement (2, 4; 26, 41)

gegenüber dem Einlass (1; 24) und dem Auslass (18; 45) abgedichtet ist, dadurch gekennzeichnet, dass die dem Ventilsitz (20; 46) benachbarte, vom Einlass (1; 24) mit Arbeitsfluid zu beaufschlagende Fläche des Ventilelementes (2, 4; 26, 41) kleiner ist als die dem Ventilsitz (20; 46) entferntere, durch das Ventilelement (2, 4; 26, 41) hindurch vom Einlass (1; 24) mit Arbeitsfluid zu beaufschlagende Fläche, die einen Arbeitsfluid aufnehmenden Steuerhohlraum (22; 48) teilweise begrenzt, dass der Steuerhohlraum (22; 48) ferner von einem Einsatz (12; 36) begrenzt ist, der eine an seinem inneren Ende in den Steuerhohlraum (22; 48) mündende Durchgangsbohrung (23; 39) aufweist, deren Querschnitt wesentlich grösser ist als der minimale Querschnitt der Verbindung (14; 27) zwischen Einlass (1; 24) und der dem Ventilsitz (20; 46) entfernten Fläche des Ventilelementes (2, 4; 26, 41), und dass die Durchgangsbohrung (23; 39) an ihrem äusseren Ende mit Hilfe eines durch Hitze zerstörbaren Auslöseelementes (8; 35) abgedichtet ist.

2. Sicherheitsventil nach Anspruch 1, dadurch gekennzeichnet, dass das Auslöseelement (8; 35) von einer Feder (9; 34) gegen einen Verschlussstopfen (11; 32) gedrückt ist, der in dieser Lage eine Abdichtung der Durchgangsbohrung (23; 39) bewirkt.

3. Sicherheitsventil nach Anspruch 2, dadurch gekennzeichnet, dass das Auslöseelement aus einer eine Flüssigkeit mit niedrigem Siedepunkt enthaltenden, geschlossenen Glasampulle (8; 35) besteht.

4. Sicherheitsventil nach einem der Ansprüche 1 bis 3, dadurch gekennzeichnet, dass die minimale Querschnittsfläche der Verbindung (14; 27) nicht grösser als die Hälfte der Querschnittsfläche der Durchgangsbohrung (23; 29) ist.

5. Sicherheitsventil nach einem der Ansprüche 1 bis 4, dadurch gekennzeichnet, dass der Steuerhohlraum (22) oder die Durchgangsbohrung (39) mit einer Öffnung (6; 29) zum Anschluss eines Prüfhahns verbunden ist.

6. Sicherheitsventil nach einem der Ansprüche 1 bis 5, für pneumatisch zu betätigende Einrichtungen, dadurch gekennzeichnet, dass das Auslöseelement (8) die Durchgangsbohrung (23) gegen die Umgebungsluft abdichtet.

7. Sicherheitsventil nach einem der Ansprüche 1 bis 5 für hydraulisch zu betätigende Einrichtungen, dadurch gekennzeichnet, dass das Auslöseelement (35) die Durchgangsbohrung (39) gegen einen Auffangbehälter (49) für Hydraulikflüssigkeit abdichtet.

8. Sicherheitsventil nach einem der Ansprüche 1 bis 7, dadurch gekennzeichnet, dass der Ventilsitz (20; 46) und zumindest der in Eingriff mit diesem kommende Teil des Ventilelementes (2; 26) aus Edelstahl bestehen.

**Revendications**

1. Robinet de sûreté pour dispositifs à actonnement pneumatique ou hydraulique, qui en cas d'incendie doivent être portés dans un état prédéterminé ou être maintenus dans un état prédéterminé, notamment pour portes pare-feu, comportant une entrée (1; 24) et une sortie (18; 45) pour le fluide de travail, un siège de soupape (20; 46) disposé entre celles-ci, sur lequel peut être appliquée une soupape (2, 4; 26, 41) mobile entre une position d'étanchéité et une position d'ouverture, ce robinet présentant également une ouverture d'aération (17; 44) reliée à la sortie (18; 45) lorsque la soupape (2, 4; 26, 41) se trouve en position d'étanchéité, et fermée de manière étanche par rapport à l'entrée (1; 24) et à la sortie (18; 45) lorsque la soupape (2, 4; 26, 41) est en position d'ouverture, caractérisé en ce que la surface de la soupape (2, 4; 26, 41) sollicitée par le fluide de travail à partir de l'entrée (1; 24) est inférieure à celle, plus éloignée du siège de soupape (20; 46) sollicitée par le fluide de travail au travers de la soupape (2, 4; 26, 41) depuis l'entrée (1; 24) et qui délimite partiellement un espace creux (22; 48) de commande recevant le fluide de travail, en ce que de plus le volume creux de commande (22; 48) est limité par une garniture (12; 36) qui comporte à son extrémité intérieure un alésage de passage (23; 39) dont la section transversale est considérablement plus grande que la section minimale de la liaison (14; 27) entre l'entrée (1; 24) et la surface de l'élément de soupape (2, 4; 26, 41) éloignée du siège de soupape (20; 46), et l'alésage de passage (23; 39) est obtenu de manière étanche à son extrémité extérieure par une pièce de déclenchement (8; 35) destructible par la chaleur.

2. Robinet selon la revendication 1, caractérisé en ce que la pièce de déclenchement (8; 35) est pressée par un ressort (9; 34) contre un bouchon obturateur (11; 32) qui dans cette position assure la fermeture étanche de l'alésage de passage (23; 39).

3. Robinet selon la revendication 2, caractérisé en ce que la pièce de déclenchement est constituée d'une ampoule de verre (8; 35) fermée, contenant un liquide à bas point d'ébullition.

4. Robinet selon l'une des revendication 1 à 3, caractérisé en ce que la surface de section transversale minimale de la liaison (14; 27) n'est pas supérieure à la moitié de la surface de section transversale de l'alésage de passage (23; 39).

5. Robinet selon l'une des revendication 1 à 4, caractérisé en ce que le volume creux de commande (22) ou l'alésage de passage (39) est relié par une ouverture (6; 29) à un robinet de jauge.

6. Robinet selon l'une des revendications 1 à 5, destiné à des dispositifs à actionnement pneumatique, caractérisé en ce que la pièce de déclenchement (8) obture l'alésage de passage (23) de manière étanche vis-à-vis de l'air ambiant.

7. Robinet selon l'une des revendications 1 à 5, destiné à des dispositifs à actionnement hydraulique, caractérisé en ce que la pièce de déclenchement (35) obture de manière étanche l'alésage de passage (39) vis-à-vis d'un récipient collecteur (49) du liquide hydraulique.

8. Robinet selon l'une des revendication 1 à 7, caractérisé en ce que le siège de soupape (20; 46) et au moins la partie de l'élément de soupape (2;

26) coopérant avec celui-ci sont en acier spécial.

## Claims

1. Safety valve for means which are to be actuated pneumatically or hydraulically and which, in the event of a fire, ha to be brought into a predetermined state or position or have to be held in a predetermined position, more especially for fireproof doors, with an inlet (1; 24) and an outlet (18; 45) for the working or operating fluid, a valve seat (20; 46) which is arranged between these and on to which a valve element (2, 4; 26, 41) movable between a sealing position and an opening position is able to be brought to provide a sealing effect, and also with a pressure-release opening (17; 44) which, with the valve element (2, 4; 26, 41) disposed in the sealing position, is connected to the outlet (18; 45) and, with the valve element (2, 4; 26, 41) disposed in the open position, is sealed off with respect to the inlet (1; 24) and the outlet (18; 45), characterised in that that surface of the valve element (2, 4; 26, 41) which is adjacent to the valve seat (20; 46) and to be triggered with operating fluid from the inlet (1; 24) is smaller than the surface which is further from the valve seat (20; 46) and is to be acted upon with operating fluid through the valve element (2, 4; 26, 41) from the inlet (1; 24), which surface partially defines a control cavity (22, 48) receiving operating fluid, that the control cavity (22, 48) is further limited by an insert (12, 36) which comprises a through-flow bore (23, 39) opening at its inner end into the control cavity (22; 48), the cross-section of the said bore being substantially larger that the minimal cross-section of the connection (14; 27) between inlet (1, 24) and that surface of the valve element (2, 4; 26, 41) which is further from the valve seat (20; 46) and that the through bore (23; 39) is sealed at its outer end with the aid of a release element (8; 35) which is destructible by heat.

2. Safety valve according to claim 1, characterised in that the release element (8; 35) is urged by a spring (9; 34) against a closure plug (11; 32) which, in this position, effects a sealing of the through bore (23; 39).

3. Savety valve according to claim 2, characterised in that the release element consists of a glass ampoule (8; 35) which contains a liquid of low boiling point.

4. Safety valve according to one of claims 1–3 characterised in that the minimum cross-section area of the connection (14; 27) is not larger than half the cross-sectional area of the through bore (23; 39).

5. Safety valve according to one of claims 1 to 4, characterised in that the control cavity (22) or the through bore (39) is connected to an opening (6; 29) for the connection of a test or sampling cock.

6. Safety valve according to one of the claims 1 to 5, for devices which are to be actuated pneumatically, characterised in that the release element (8) seals off the through bore (23) relatively to the ambient air.

7. Safety valve according to on of the claims 1 to 5, for devices which are to be actuated hydraulically characterised in that the release element (35) seals off the throug bore (39) relatively to a collecting container (49) for hydraulic fluid.

8. Safety valve according to one of the claims 1 to 7, characterised in that the valve seat (20; 46) and at least that part of the valve element (2; 26) coming into engagement with the said seat consist of high-grade stell.

1/2.

Fig. 1

Fig. 2